# EUROPÄISCHE PATENTSCHRIFT

(11) **EP 2 702 264 B1**
(45) Veröffentlichungstag und Bekanntmachung des Hinweises auf die Patenterteilung: **20.09.2017**
(21) Anmeldenummer: 12715979.6
(22) Anmeldetag: 18.04.2012
(51) Int. Cl.: F02P 19/02

(54) **VERFAHREN UND VORRICHTUNG ZUR BESTIMMUNG EINER TEMPERATUR EINER GLÜHSTIFTKERZE BEI EINEM BETRIEB IN EINER BRENNKRAFTMASCHINE**
METHOD AND DEVICE FOR DETERMINING A TEMPERATURE OF A PENCIL GLOW PLUG DURING OPERATION IN AN INTERNAL COMBUSTION ENGINE
PROCÉDÉ ET DISPOSITIF DESTINÉS À DÉTERMINER UNE TEMPÉRATURE D'UNE BOUGIE-CRAYON DE PRÉCHAUFFAGE EN FONCTIONNEMENT DANS UN MOTEUR À COMBUSTION INTERNE

(30) Priorität: 29.04.2011 DE 102011017814
(43) Veröffentlichungstag der Anmeldung: 05.03.2014
(73) Patentinhaber: Robert Bosch GmbH, 70442 Stuttgart (DE)
(72) Erfinder: KAPPELMANN, Peter, 70565 Stuttgart (DE); JOOS, Sascha, 01099 Dresden (DE); RAPP, Bernd, 71701 Schwieberdingen (DE)
(86) Internationale Anmeldenummer: PCT/EP2012/057041
(87) Internationale Veröffentlichungsnummer: WO 2012/146513

(56) Entgegenhaltungen:
- EP-A1- 0 315 934
- EP-A2- 2 128 429
- DE-A1- 3 811 816
- DE-A1-102007 058 697
- US-A1- 2011 000 901

## Beschreibung

### Stand der Technik

Die Erfindung betrifft ein Verfahren zur Bestimmung der Temperatur einer Glühstiftkerze bei einem Betrieb in einer Brennkraftmaschine, wobei eine Temperatur-Widerstands-Referenzkorrelation bestimmt wird, sowie eine Vorrichtung zur Durchführung des Verfahrens.

Glühstiftkerzen, welche in einer Brennkraftmaschine zur Anwendung kommen, haben produktionstechnisch für eine Nominalspannung eine vorgegebene Toleranz der an der Glühstiftkerze einzustellenden Temperatur. So wird beispielsweise für eine Keramikglühstiftkerze bei einer Nominalspannung von 7 Volt, mit welcher die Glühstiftkerze angesteuert wird, eine Temperatur von 1.200° C als Glühtemperatur angegeben, welche eine Toleranz von +/- 50 K zulässt. Das bedeutet, dass die maximale Temperatur der Glühstiftkerze 1.250° C nicht überschreiten darf. Werden Steuergeräte, welche die Glühstiftkerzen in der Brennkraftmaschine ansteuern, appliziert, so muss dabei beachtet werden, dass es Abweichungen zu der gewünschten Temperatur von beispielsweise 1.200° C geben kann. Da das Steuergerät während des Betriebes der Glühstiftkerzen in der Brennkraftmaschine auf sich ändernde Toleranzen nicht reagieren kann, muss die maximale Glühstiftkerzentemperatur von 1200 °C fest im Steuergerät vorgegeben werden. Aus der DE 10 2008 040 971 A1 sind ein Verfahren und eine Vorrichtung zum Regeln der Temperatur von Glühstiftkerzen in einer Brennkraftmaschine bekannt, bei welchem in einem Referenzbetrieb der Brennkraftmaschine ein mathematischer Zusammenhang zwischen gemessenen Temperaturen und gemessenen Widerständen wenigstens einer Glühstiftkerze gebildet wird, wobei sich die Widerstände aus einer tatsächlich anliegenden Spannung und einem tatsächlichen Stromfluss an dieser Glühstiftkerze ergeben und dieser mathematische Zusammenhang über die gesamte Lebensdauer der Kerze dynamisch angepasst und im gesamten Betrieb der Brennkraftmaschine herangezogen wird. Bei diesem Verfahren müssen zur verbesserten Applikationsgüte die sich ändernden Betriebsbedingungen der Brennkraftmaschine berücksichtigt werden. Dies erschwert die Applikation des Steuergerätes für die verbaute Glühstiftkerze, da große Toleranzen beim Einsatz der Glühstiftkerze in der Brennkraftmaschine berücksichtigt werden müssen. Die DE 10 2007 058 697 A1 offenbart die Temperaturregelung einer Glühstiftkerze auf der Grundlage eines effektiven Widerstands. Weiterhin offenbart die EP 0 315 934 A1 eine Temperaturregelung für Glühstiftkerzen unter Nutzung von Widerstands-Temperatur-Diagrammen.

### Offenbarung der Erfindung

Der Erfindung liegt somit die Aufgabe zugrunde, ein Verfahren zur Bestimmung einer Temperatur einer Glühstiftkerze bei einen Betrieb in einer Brennkraftmaschine anzugeben, bei welchem bei der Applikation von Steuergeräten, die die Glühstiftkerze während des Betriebes der Brennkraftmaschine ansteuern, die tatsächlichen Toleranzen der Glühstiftkerze berücksichtigt werden.

Erfindungsgemäß wird die Aufgabe dadurch gelöst, dass nach dem Einbau der Glühstiftkerze in die Brennkraftmaschine ein Kalibrierschritt durchgeführt wird, bei welchem mittels der, vor dem Einbau der Glühstiftkerze in die Brennkraftmaschine bestimmten Temperatur-Widerstands-Referenzkorrelation eine glühstiftkerzenspezifische Temperatur-Widerstands-Korrelation ermittelt wird, aus welcher die Temperatur der Glühstiftkerze während des Betriebes des Glühstiftkerze in der Brennkraftmaschine bestimmt wird. Dies hat den Vorteil, dass eine höhere Maximaltemperatur der Glühstiftkerze in dem Steuergerät appliziert werden kann. Durch die höhere, im Steuergerät zu applizierende Kerzentemperatur wird ein besseres Startverhalten und/oder ein ruhigerer Leerlauf der Brennkraftmaschine erzielt. Darüber hinaus ist eine Verringerung der Emission der Brennkraftmaschine möglich.

In einer besonders einfachen und kosten neutralen Ausführungsform wird während des Kalibrierschrittes bei Anliegen einer ersten Spannung an der Glühstiftkerze ein erster Widerstand der Glühstiftkerze ermittelt, welchem aus der Temperatur- Widerstands-Referenzkorrelation eine erste Temperatur zugeordnet wird, wobei aus diesem ersten Temperatur-Widerstands- Wertepaares die glühstiftkerzenspezifische Temperatur- Widerstands-Korrelation gebildet wird. Dadurch wird die tatsächliche Temperatur der Glühstiftkerze ohne direkte Temperaturmessung ermittelt, was den Messaufbau an den Glühstiftkerzen verringert.

Vorteilhafterweise wird bei einer zweiten, an der derselben Glühstiftkerze anliegenden Spannung ein zweiter Widerstand gemessen, dem aus einer zweiten Temperatur-Widerstands-Referenzkorrelation eine zweite Temperatur zugeordnet wird, wobei aus den so bestimmten ersten Wertepaar des ersten gemessenen Widerstands und der zugeordneten ersten Temperatur sowie des zweiten Wertepaares des zweiten gemessenen Widerstandes und der zugeordneten zweiten Temperatur die glühstiftkerzenspezifische Temperatur-Widerstands-Korrelation gebildet wird. Aufgrund des Vorhandenseins von zwei Temperatur-Widerstands-Wertepaaren lässt sich die glühstiftkerzenspezifische Temperatur-Widerstands-Korrelation einfach in Form einer Geraden ermitteln, die eine zuverlässige Bestimmung der tatsächlichen Betriebstemperatur der Glühstiftkerze erlaubt, woraus bei der weiteren Verarbeitung innerhalb des Steuergerätes eine zuverlässige Steuerung bzw. Regelung der Glühstiftkerze resultiert.

In einer Ausgestaltung wird die Temperatur-Widerstands-Referenzkorrelation als Mittelwert über einen Glühstiftkerzenwiderstand aus einer Mehrzahl, mit unterschiedlichen Fertigungstoleranzen behafteter Glühstiftkerzen eines Glühstiftkerzentyps nach deren Herstellung bestimmt. Aufgrund der Auswertung der Temperatur-Widerstands-Werte einer Vielzahl von Glühstiftkerzen eines Glühstiftkerzentyps einer Produktionscharge wird aus den bekannten Mittelwerten eine besonders hohe Zuverlässigkeit bei der Bestimmung des Toleranzbandes der glühstiftkerzenindividuellen Temperatur-Widerstands-Korrelation gewährleistet. Auf Referenzmessungen während des Betriebes der Glühstiftkerzen in der Brennkraftmaschine kann verzichtet werden, wodurch auch eine nachteilige Beeinflussung der Temperatur-Widerstands-Referenzkorrelation durch den aktuellen Betriebszustand der Brennkraftmaschine unterbunden wird.

In einer Variante ist die Temperatur-Widerstands-Referenzkorrelation als Referenzkennlinie, vorzugsweise Referenzgeraden, ausgebildet, welche mit einem Toleranzband versehen wird, das dieselbe Steigung aufweist wie die Referenzkennlinie. Die Streuung der Temperatur der Glühstiftkerze um diese als Mittelwertkurve ausgebildete Referenzkennlinie in Abhängigkeit des Glühstiftkerzenwiderstandes ist geringer als bei der Verwendung der, in den technischen Kundenunterlagen angegebenen Werte von +/- 50 K. Dadurch wird die Toleranz für jede Glühstiftkerze verringert. Wird eine Nominalspannung an die Glühstiftkerze angelegt und der Widerstand gemessen, so kann mit Hilfe der Referenzkennlinie eine Temperatur bestimmt werden, die mit einer geringeren Toleranz behaftet ist.

In einer Weiterbildung wird die Referenzkennlinie einmalig für jeden Glühstiftkerzentyp ermittelt und abgespeichert. Dabei ist die Toleranz der Referenzkennlinie lediglich von dem Glühstiftkerzentyp abhängig. Auf eine Berücksichtigung der Betriebsabläufe der Brennkraftmaschine bei der Toleranzbestimmung für jede einzelne Glühstiftkerze, welche nur bei dem Einsatz der Glühstiftkerze in der Brennkraftmaschine bestimmt werden kann, kann somit verzichtet werden. Dadurch vereinfacht sich nicht nur das Verfahren der Kalibrierung der Glühstiftkerze, sondern es wird auch die Genauigkeit bei der Bestimmung der tatsächlichen Betriebstemperatur der Glühstiftkerze verbessert. Die Toleranzbreite bei der maximalen Temperatur, welche die Glühstiftkerze aufweisen darf, wird somit eingeschränkt und eine höhere Maximaltemperatur der Glühstiftkerze kann in das Steuergerät appliziert werden. Darüber hinaus wird die nur ein einziges Mal ermittelte Temperatur-Widerstands -Referenzkorrelation für alle Glühstiftkerzen derselben Produktionscharge verwendet. Die Ermittlung von Einzelreferenzen für jede Glühstiftkerze entfällt.

Vorteilhafterweise wird der erste Kalibrierschritt der Glühstiftkerzen in einer Bandende-Fertigung eines Kraftfahrzeuges ausgeführt. Damit wird sichergestellt, dass die in der Brennkraftmaschine verbauten Glühstiftkerzen bei Inbetriebnahme des Fahrzeuges bereits kalibriert sind.

In einer weiteren Ausführungsform wird der Kalibrierschritt zur Bestimmung der glühstiftkerzenspezifischen Temperatur-Widerstands-Korrelation in einer Nachlaufphase eines, die Brennkraftmaschine steuernden und/oder regelnden Steuergerätes ausgeführt. Da in der Nachlaufphase des Steuergerätes noch definierte und reproduzierbare Motorbetriebszustände vorliegen, kann somit eine hochgenaue Kalibrierung erfolgen, da auf die gegebenen Betriebszustände der Brennkraftmaschine zurückgegriffen werden kann.

Vorteilhafterweise wird der Kalibrierschritt zur Bestimmung der glühstiftkerzenspezifischen Temperatur-Widerstands-Korrelation mehrfach wiederholt. Durch die wiederholte Kalibrierungsmessung während der Lebensdauer der Glühstiftkerze in der Brennkraftmaschine werden die Alterungserscheinungen an der Glühstiftkerze in der glühstiftkerzenspezifischen Temperatur-Widerstands-Korrelation berücksichtigt und somit die Genauigkeit bei der Bestimmung der tatsächlichen Glühtemperatur der Glühstiftkerze erhöht.

Um den Alterungsprozess der Glühstiftkerze über deren Lebensdauer zu berücksichtigen, erfolgt eine Häufigkeit der Wiederholung des Kalibrierschrittes zur Bestimmung der glühstiftkerzenspezifischen Temperatur-Widerstands-Korrelation in Abhängigkeit von einer Anzahl der stattgefundenen Glühungen und/oder der Glühintensitäten und/oder der Glühdauern der Glühstiftkerze. Damit wird die Genauigkeit der Kalibrierung während des Einsatzes in der Brennkraftmaschine durch einen mehrfachen Abgleich der Glühstiftkerze verbessert.

Alternativ erfolgt die Bestimmung der glühstiftkerzenindividuellen Temperatur-Widerstands-Korrelation nach einem Austausch der Glühstiftkerze. Dabei wird sichergestellt, dass dem nachfolgenden Steuer- und/oder Regelungsprozess der Glühstiftfkerze immer die tatsächliche Temperatur der Glühstiftkerze zu Grunde liegt.

Um zuverlässige und repräsentative Widerstandswerte der Glühstiftkerze zu erhalten, erfolgt die Messung des ersten bzw. zweiten Widerstandes nach Ausbildung eines stationären Temperaturverlaufes innerhalb der Glühstiftkerze nach dem Anlegen der ersten bzw. zweiten Spannung. Damit wird gewährleistet, dass vor der Messung die Glühstiftkerze gleichmäßig durchgeglüht ist und keine instationäre Temperaturverteilung den Messvorgang verfälscht.

Eine Weiterbildung der Erfindung betrifft eine Vorrichtung zur Bestimmung der Temperatur einer Glühstiftkerze bei einem Betrieb in einer Brennkraftmaschine, umfassend eine Verarbeitungseinheit, welche mit einer Speichereinheit verbunden ist, wobei in der Speichereinheit eine Temperatur-Widerstands-Referenzkorrelation abgespeichert ist. Um die Toleranzbreite der maximal zulässigen Temperatur der Glühstiftkerze bei der Applikation innerhalb eines Steuergerätes zu verringern, führt die Verarbeitungseinheit nach dem Einsatz der Glühstiftkerze in die Brennkraftmaschine einen Kalibrierschritt aus, bei welchem mittels der, vor dem Einsatz der Glühstiftkerze in die Brennkraftmaschine bestimmten Temperatur-Widerstands-Referenzkorrelation eine glühstiftkerzenspezifische Temperatur- Widerstands-Korrelation ermittelt und aus der in der Speichereinheit abgespeicherten, glühstiftkerzenspezifischen Temperatur-Widerstands-Korrelation die Verarbeitungseinheit während des Betriebes der Glühstiftkerze in der Brennkraftmaschine die Temperatur der Glühstiftkerze bestimmt. Dies hat den Vorteil, dass eine höhere Maximaltemperatur der Glühstiftkerze in dem Steuergerät appliziert werden kann. Durch die höhere, im Steuergerät zu applizierende Glühstiftkerzentemperatur wird ein besseres Startverhalten und/oder ein ruhigerer Leerlauf der Brennkraftmaschine erzielt. Darüber hinaus ist eine Verringerung der Emission der Brennkraftmaschine möglich.

Vorteilhafterweise ist die, eine erste Spannung an die Glühstiftkerze anlegende Verarbeitungseinheit mit einem Stromsensor verbunden, welcher ein erstes Stromsignal an die Verarbeitungseinheit leitet, welche aus diesem ersten Stromsignal einen ersten Widerstandswert bestimmt und diesem ersten Widerstandswert aus der abgespeicherten Temperatur-Widerstands-Referenzkorrelation einen ersten Temperaturwert zuordnet und anschließend eine zweite Spannung an die Glühstiftkerze anlegt, wobei der Stromsensor der Verarbeitungseinheit ein zweites Stromsignal liefert, aus welchem die Verarbeitungseinheit einen zweiten Widerstandswert ermittelt, welchem ein zweiter Temperaturwert aus der Temperatur-Widerstands-Referenzkorrelation zugeordnet wird, wobei die Verarbeitungseinheit aus dem erstem Temperatur-Widerstands-Wertepaar und dem zweiten Temperatur-Widerstands-Wertepaar die glühstiftkerzenspezifische Temperatur-Widerstands-Korrelation bestimmt. Somit wird die Bestimmung der glühstiftkerzenspezifischen Temperatur-Widerstands-Korrelation mit einer an sich vorhandenen Hardware ausgeführt, wodurch ein kostengünstiges Verfahren ermöglicht wird. Aufgrund des Vorhandenseins von zwei Temperatur-Widerstands-Wertepaaren lässt sich die glühstiftkerzenspezifische Temperatur-Widerstands-Korrelation einfach in Form einer Geraden ermitteln, die bei der weiteren Verarbeitung innerhalb des Steuergerätes eine zuverlässige Steuerung bzw. Regelung der Glühstiftkerze gewährleistet. Dabei erfolgt eine zuverlässige Bestimmung der tatsächlichen Betriebstemperatur der Glühstiftkerze.

Die Erfindung lässt zahlreiche Ausführungsformen zu. Eine davon soll anhand der in der Zeichnung dargestellten Figuren näher erläutert werden.

Es zeigt:
- Fig. 1:: Prinzipdarstellung eines Glühsystems in einem Kraftfahrzeug
- Fig. 2:: Temperatur-Widerstands-Verhalten einer Produktionscharge von Glühstiftkerzen eines Glühstiftkerzentyps bei einer Nominalspannung von 7 Volt
- Fig. 3:: Temperatur-Widerstands-Verhalten einer Produktionscharge von Glühstiftkerzen des Glühstiftkerzentyps gemäß Fig. 2 bei einer Nominalspannung von 4 Volt
- Fig. 4: glühstiftkerzenspezifische Temperatur-Widerstands-Korrelation einzelner Glühstiftkerzen.

Gleiche Merkmale sind mit gleichen Bezugszeichen gekennzeichnet.

Kalte Verbrennungsmotoren, insbesondere Dieselmotoren, benötigen bei Umgebungstemperaturen von < 40° C eine Starthilfe zur Zündung des in der Brennkraftmaschine eingeleiteten Kraftstoff-Luft-Gemisches. Als Starthilfe werden Glühsysteme eingesetzt, welche aus Glühstiftkerzen, einem Glühzeitsteuergerät und einer Glühsoftware, die in einem Motorsteuergerät oder dem Glühzeitsteuergerät abgelegt ist, besteht. Außerdem werden Glühsysteme auch zur Verbesserung der Emission des Fahrzeuges benutzt. Weitere Einsatzgebiete des Glühsystems bestehen im Brennerabgassystem, bei der Standheizung, bei der Vorwärmung von Kraftstoff oder der Vorwärmung des Kühlwassers.

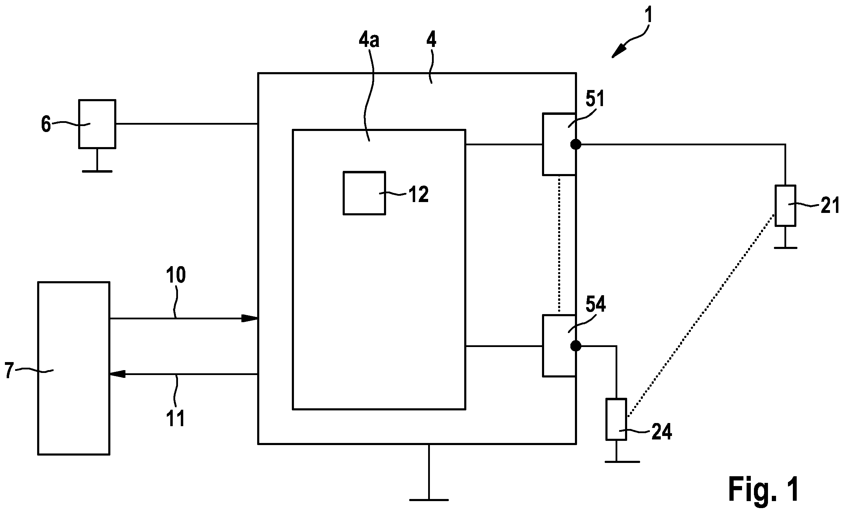

Fig. 1 zeigt ein solches Glühsystem, bei welchem mehrere Glühstiftkerzen 21 bis 24 vorhanden sind, wobei jede Glühstiftkerze 21 bis 24 in jeweils einem nicht weiter dargestellten Zylinder eines Brennraumes der Brennkraftmaschine hineinragt. Die Glühstiftkerzen 21 bis 24 sind identisch aufgebaut und stellen übliche Niederspannungs-Glühstiftkerzen dar. In Fig. 1 sind die Glühstiftkerzen 21 bis 24 der Einfachheit halber als Ersatzwiderstand dargestellt, welche an die Masse 3 der Brennkraftmaschine führen.

Die Glühstiftkerzen 21 bis 24 sind mit einem Glühzeitsteuergerät 4 verbunden, welches für jede Glühstiftkerze 21 bis 24 einen Leistungshalbleiter 51 bis 54 aufweist. Das Glühzeitsteuergerät 4 umfasst einen Mikrocontroller 4a zur Verarbeitung ein- und ausgehender Signale. Weiterhin ist eine Bordnetzspannung 6 mit dem Glühzeitsteuergerät 4 verbunden, welche die Glühstiftkerzen 21 bis 24 über die Leistungshalbleiter 51 bis 54 mit der erforderlichen Nominalspannung versorgt. Das Glühzeitsteuergerät 4 führt an ein Motorsteuergerät 7, welches wiederum mit der nicht weiter dargestellten Brennkraftmaschine verbunden ist. Das Motorsteuergerät 7 und das Glühzeitsteuergerät 4 weisen eine Schnittstelle auf. Diese Schnittstelle kann sowohl aus einer Eindraht- als auch einer Zweidrahtverbindung 10, 11 bestehen. Über diese Schnittstelle werden Daten zwischen dem Motorsteuergerät 7 und dem Glühzeitsteuergerät 4 ausgetauscht, wobei darüber sowohl die Ansteuerung des Glühzeitsteuergerätes 4 erfolgt als auch die Diagnosekommunikation.

Das Glühzeitsteuergerät 4 gibt über die Leistungshalbleiter 51 bis 54 an die Glühstiftkerzen 21 bis 24 ein pulsweitenmoduliertes Ausgangssignal (PWM-Signal) ab, welches an der jeweiligen Glühstiftkerze 21 bis 24 die erforderliche Glühstiftkerzensteuerspannung einstellt. Durch Wahl des Tastverhältnisses (d.h. des Verhältnisses von Einschalt- zu Ausschaltzeiten des PWM Signals) kann unter Berücksichtigung der Spannung die durch dass PWM Signal durchgeschaltet wird die gewünschte Effektivspannung an der Glühkerze (Glühstiftkerzensteuerspannung) realisiert werden. Dabei kann auch die die zur Verfügung stehende Batteriespannung des Kraftfahrzeugs berücksichtigt werden. Das Glühzeitsteuergerät 4 umfasst dabei eine Speichereinheit 12. Zur Messung des durch jede Glühstiftkerze 21 bis 24 fließenden Stromes, der dem Mikrocontroller 4a zugeleitet wird, dient der, der Glühstiftkerze 21 bis 24 zugeordnete Leistungshalbleiter 51 bis 54, der vorteilhafterweise als Smart-Feldeffekt-Transistor ausgebildet ist, welcher ein PWM-Signal erzeugt und gleichzeitig den Strom misst. Der Mikrocontroller 4a bestimmt daraus den entsprechenden Widerstandswert der Glühstiftkerze 21 bis 24. Alternativ können anstelle eines Smart-Feldeffekt-Transistors auch ein MOSFET und ein Shunt verwendet werden.

Um nun für eine einzelne Glühstiftkerze 21, 22, 23, 24 eine genaue Ansteuerung durch das Glühzeitsteuergerät 4 zu gewährleisten, muss die maximale Glühtemperatur, welche während des Betriebes in der Brennkraftmaschine an je einer Glühstiftkerze 21 bis 24 anliegt, ermittelt werden. Dabei werden in einem ersten Schritt alle Glühstiftkerzen einer Produktionscharge eines Glühstiftkerzentyps nach der Produktion ausgewertet. Für jede einzelne Glühstiftkerze wird am Bandende der Glühstiftkerzenfertigung eine Nominalspannung an jede Glühstiftkerze angelegt. Nach einer gewissen Zeit werden der Strom und die Temperatur der Glühstiftkerze ermittelt. Aus dem gemessenen Strom wird der Widerstand ermittelt. Glühstiftkerzen, die nicht in der Toleranz liegen, werden aussortiert.

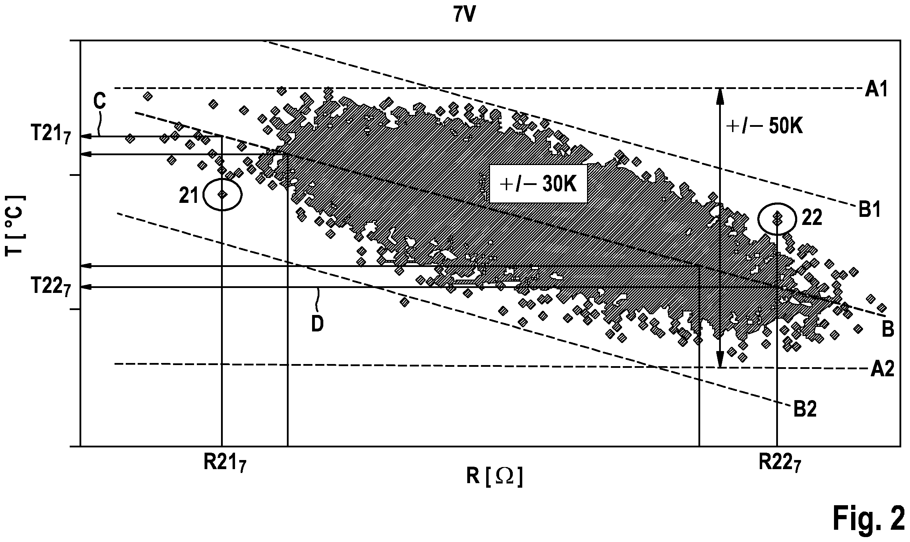

In Fig. 2 ist eine Wolke von Messwerten für eine Vielzahl von KeramikGlühstiftkerzen nach der Produktion dargestellt, die mit einer Nominalspannung von 7 Volt beaufschlagt wurden. Die einzelnen Punkte charakterisieren dabei die einzelnen Glühstiftkerzen, wobei die ermittelte maximale Glühtemperatur der Glühstiftkerzen eine Toleranz von 1.200° C +/- 50 K einschließt. Dieses Toleranzband ist durch die Linien A1 und A2 dargestellt, welche die Wolke der Messwerte der einzelnen Glühstiftkerzen umfasst.

Aus dieser Wolke der Messwerte der Glühstiftkerzen wird eine Mittelwertkurve B über den Glühstiftkerzenwiderstand R ermittelt, wobei für die Glühstiftkerzen mit demselben Widerstand die Temperaturen gemittelt werden. Daraus ergibt sich die erste Mittelwertkurve B in Form einer Geraden. Um diese Mittelwertkurve B werden Toleranzbänder, die ebenfalls von Geraden begrenzt werden, gelegt, die dieselbe Steigung aufweisen, wie die als Gerade verlaufende Mittelwertkurve B. Die Toleranzbänder verlaufen somit parallel mit einer konstanten Breite zu der Mittelwertkurve B und sind durch die gestrichelten Geraden B1 und B2 gekennzeichnet. Die Streuung der Temperatur der einzelnen Glühstiftkerzen der Produktionscharge um diese Mittelwertkurve B in Abhängigkeit des Glühstiftkerzenwiderstandes R beträgt bei den Toleranzbändern B1 und B2 nur noch +/- 30 K. Dies bedeutet, dass nach Anlegen der Nominalspannung von 7 Volt ein Widerstand R gemessen wird, dem mit Hilfe dieser Mittelwertkurve B eine Temperatur zugeordnet werden kann, die mit einer Toleranz von +/- 30 K die maximale Temperatur der verwendeten ausgemessenen Glühstiftkerze wiedergibt. Die Mittelwertkurve B bildet dabei eine Temperatur-Widerstands-Referenzkorrelation.

Anschließend wird an die Keramikglühstiftkerzen eine zweite Nominalspannung von 4 V angelegt, wobei aus der Wolke der Messwerte eine zweite Mittelwertkurve F bestimmt wird, die ebenfalls eine Gerade darstellt und von dem Toleranzband F1, F2 umschlossen ist. Auch bei dieser zweiten Mittelwertkurve F beträgt die Toleranz der maximalen Glühtemperatur der Glühkerze +/- 30 K.

Nach der Ermittlung der beiden Temperatur-Widerstands-Referenzkorrelationen B, F werden diese in einem zweiten Schritt in dem Speicher 12 des Glühzeitsteuergerätes 4 einmalig fest abgespeichert. Zeitgleich werden die Glühstiftkerzen 21 bis 24, welche aus der, nach der Herstellung ausgemessenen Produktionscharge entnommen wurden, in die Brennkraftmaschine verbaut.

Danach erfolgt ein erster Kalibrierschritt der Glühstiftkerzen 21 bis 24, welcher am Bandende der Fahrzeugfertigung während eines Nachlaufes des Glühzeitsteuergerätes stattfindet. Ein solcher Nachlauf erfolgt immer nach einem Abschalten der Brennkraftmaschine. Dabei wird dieselbe Schnittstelle des Glühzeitsteuergerätes genutzt wie bei der Aktivierung der Kalibrierung durch einen Werkstatttester.

Die Positionierung dieser Kalibrierungsmessung während des Nachlaufes ist wichtig, da hier definierte und reproduzierbare Motorbetriebszustände vorliegen. Die Häufigkeit der Kalibrierungsmessung während der Nutzung des Kraftfahrzeuges hängt von der Anzahl der gefahrenen Kilometer des Kraftfahrzeuges, der Häufigkeit der stattgefundenen Glühungen der Glühstiftkerze, der Glühintensitäten der Glühstiftkerze und den Glühdauern der Glühstiftkerze ab. Ebenso findet diese Kalibrierung beim Tausch der Glühstiftkerze statt, wo diese entweder durch einen Werkstatttester aktiviert wird oder selbständig durch eine Funktion des Glühzeitsteuergerätes, die den Kerzenaustausch detektiert.

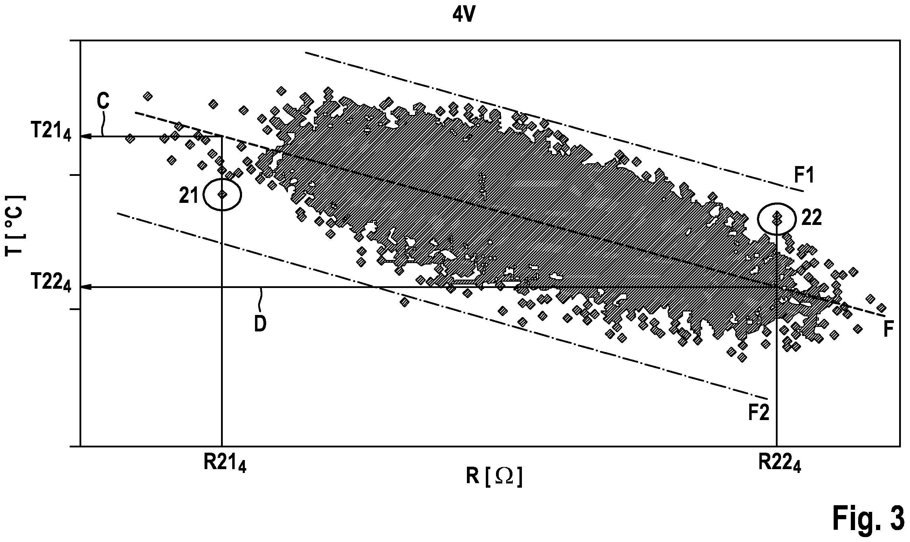

Der Kalibrierschritt soll nun näher am Beispiel der beiden aus der Produktionscharge ausgewählten Glühstiftkerzen 21 und 22 verdeutlicht werden. Mittels einer Strommessung ermittelt das Glühzeitsteuergerät 4 die der Glühstiftkerze 21 bzw. 22 entsprechenden Widerstandswerte. Beim Anlegen einer ersten Nominalspannung von 7 V wird für die erste Glühstiftkerze 21, welche in den Fig. 2 und 3 durch den Punkt 21 dargestellt ist, ein Widerstand R 21₇ gemessen. Dieser Widerstand R 21₇ wird in Fig. 2 auf die Mittelwertkurve B verlängert und ausgehend von dem Schnittpunkt des Widerstandswertes R 21₇ mit dieser Mittelwertkurve B die zugehörige Temperatur T 21₇ der Glühstiftkerze 21 ermittelt, was durch die Linie C in Fig. 2 gekennzeichnet ist. Dieses erste Wertepaar R21₇; T21₇ stellt einen ersten Ausgangspunkt für die Erstellung der glühstiftkerzenspezifischen Temperatur-Widerstands-Korrelation II der Glühstiftkerze 21 dar.

Die zweite Glühstiftkerze 22 ist in den Fig. 2 und 3 durch den Punkt 22 charakterisiert. Bei dieser Glühstiftkerze 22 wird nach dem Anlegen der Nominalspannung von 7 Volt ein Widerstand R 22₇ gemessen. Auch dieser Widerstandswert R 22₇ wird auf die Mittelwertkurve B verschoben und ausgehend von dem Schnittpunkt der Mittelwertkurve B mit dem Widerstandswert R 22₇ wird die maximale Glühtemperatur T 22₇ der Glühstiftkerze 22 ermittelt, was durch die Linie D angedeutet ist. Dieses Wertepaar R 22₇,T 22₇ wird als Ausgangspunkt der zweiten glühkerzenspezifischen Temperatur-Widerstands-Korrelation III der zweiten Glühstiftkerze 22 herangezogen.

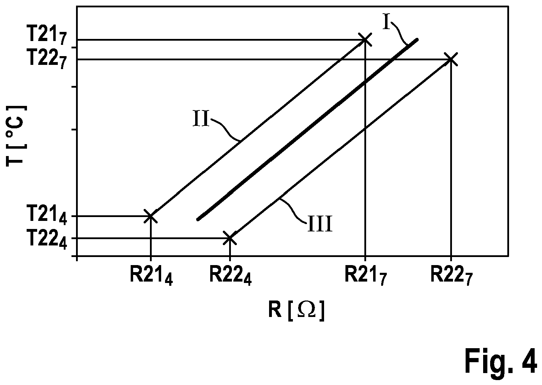

In Fig. 3 sind die Temperatur-Widerstands-Werte der Produktionscharge ausgemessen, welche vor dem Einbau in eine Brennkraftmaschine bei einer Nominalspannung von 4 Volt betrieben wurden. Aufgrund dieser geringeren Nominalspannung von 4 V liegen die Widerstands- und Temperaturniveaus niedriger als in Fig. 2 dargestellt. Wird nun wiederum die Glühstiftkerze 21, welche durch den Punkt 21 charakterisiert ist, herausgegriffen, so wird nach der Ansteuerung mit 4 Volt Nominalspannung der Glühstiftkerze 21 ein Widerstand R 21₄ bestimmt. Dieser Widerstand R 21₄ wird auf die Mittelwertkurve F verschoben und die zu dem Schnittpunkt gehörende Temperatur T 21₄ der Glühstiftkerze 21 ermittelt, was durch die Linie C gekennzeichnet ist. Aus dem bei 4 V Nominalspannung bestimmten Wertepaar (R21₄; T21₄) und dem für die Nominalspannung 7V ermittelten Wertepaar (R21₇; T21₇) wird für die Glühstiftkerze 21 die erste glühstiftkerzenspezifische Temperatur-Widerstands-Korrelation in Form der Geraden II bestimmt, wie diese in Fig. 4 dargestellt ist.

Bei der Glühstiftkerze 22, die in Punkt 22 dargestellt ist, wird bei einer Ansteuerung der Glühstiftkerze 22 mit einer Nominalspannung von 4 Volt ein Widerstand R 22₄ gemessen. Dieser Widerstand R 22₄ ergibt mit Hilfe der zweiten Mittelwertkurve F eine Temperatur T 22₄ der Glühstiftkerze 22 (Linie D). Die Wertepaare (R22₄; T22₄) und (R22₇; T22₇) ermöglichen die Konstruktion der zweiten glühkerzenspezifischen Temperatur-Widerstands-Korrelation für die zweite Glühstiftkerze 22, wie diese in Form der Gerade III in Fig. 4 dargestellt ist.

Daraus folgt, dass wenn an eine, in der Brennkraftmaschine verbauten Glühstiftkerze 21, 22 eine beliebige Spannung angelegt wird, aus den Temperatur-Widerstands-Referenzkorrelationen in Form der Referenzwertkurven B, F die maximale Glühtemperatur der Glühstiftkerze 21, 22 bestimmt werden kann, woraus die glühstiftkerzenspezifische Widerstands-Temperatur-Korrelation für jede Glühstiftkerze 21, 22 ermittelt wird, die in Fig. 4 dargestellt ist. In Fig. 4 ist die glühkerzenspezifische Temperatur-Widerstands-Korrelation I für eine sogenannte "Mittelwertkerze" dargestellt, welcher einer Glühstiftkerze entspricht, deren Temperatur- Widerstands-Werte bei 7 V Nominalspannung auf der Mittelwertkurve B bzw. bei 4 V Nominalspannung auf der Mittelwertkurve F liegen. Bei der Verwendung der glühkerzenspezifischen Temperatur-Widerstands-Korrelation I dieser "Mittelwertkerze" muss von einer Toleranz der Maximaltemperatur von +/-50 K ausgegangen werden.

Wird jedoch, wie bereits erläutert, der Widerstand R einer Glühstiftkerze 21, 22 bei 7 Volt und bei 4 Volt gemessen und jedem dieser Widerstandswerte ein Temperaturwert zugeordnet, welcher mit Hilfe der Mittelwertkurve B oder F bestimmt wurde, werden Wertepaare gebildet, aus welchen für die jeweils betreffende Glühstiftkerze 21, 22 eine glühstiftkerzenspezifische Temperatur-Widerstands-Gerade bestimmt wird. Die zu erwartenden Schwankungen um diese Gerade betragen aber nur noch +/- 30 K. Die maximale Temperatur der Glühstiftkerze 21, 22 kann dadurch mit 1.220° C in dem Glühstiftsteuergerät 4, und somit höher als im Stand der Technik, appliziert werden, da mit der maximalen Toleranz von +/- 30 K die zulässige Maximaltemperatur von 1.250° C nicht überschritten wird.

Diese glühstiftkerzenspezifischen Temperatur-Widerstands-Korrelationen (Gerade II und Gerade III) werden im Speicher 12 des Glühzeitsteuergerätes 4 abgespeichert. Während des Betriebes der Glühstiftkerzen 21, 22 in der Brennkraftmaschine wird eine Spannung, welche an der jeweiligen Glühstiftkerze 21, 22 zur Erzielung eines Spannungssollwertes angelegt werden muss, einer Steuerung oder Regelung unterworfen. Für die Steuerung oder Regelung ist die Kenntnis der maximalen Glühtemperatur jeder Glühstiftkerze 21, 22 notwendig. Diese maximale Glühtemperatur wird dabei anhand der, an der jeweiligen Glühstiftkerze gemessenen Widerstandes aus der, zu der Glühstiftkerze 21, 22 zugehörigen, abgespeicherten glühstiftkerzenspezifischen Temperatur-Widerstands - Korrelation II oder III ermittelt.

Der Kalibrierschritt kann zyklisch wiederholt werden, um die Alterung der Glühstiftkerze 21, 22 in der Brennkraftmaschine zu berücksichtigen.

Dieser, im Zusammenhang mit dem Glühzeitsteuergerät 4 beschriebene Ablauf kann alternativ aber auch vom Motorsteuergerät 7 durchgeführt werden, wobei der Speicher 12 im Motorsteuergerät 7 angeordnet ist.
Es sei noch darauf verwiesen, dass die Messung der Widerstände nach Anlegen der Nominalspannung von 4 V oder 7 V erst dann erfolgt, wenn sich eine stationäre Temperaturverteilung innerhalb der verwendeten Glühstiftkerze 21, 22 eingestellt hat.

Aufgrund der Erfindung wird die Toleranzbreite der im Kraftfahrzeug verbauten Glühstiftkerze eingeschränkt. Eine höhere, maximale Glühstiftkerzentemperatur kann somit bei der Steuerung bzw. Regelung der Glühstiftkerze im Glühzeitsteuergerät 4 oder Motorsteuergerät 7 appliziert werden. Durch die erhöhte maximale Glühstiftkerzentemperatur kann ein besseres Startverhalten und ein ruhigerer Motorleerlauf erzielt werden, wobei eine Verringerung der Schadstoffemission gewährleistet wird.

## Patentansprüche

1. Verfahren zur Bestimmung der Temperatur einer Glühstiftkerze bei einem Betrieb in einer Brennkraftmaschine, bei welchem eine Temperatur-Widerstands-Referenzkorrelation (B, F) bestimmt wird, **dadurch gekennzeichnet, dass** die Temperatur-Widerstands-Referenzkorrelation (B, F) aus einer Mehrzahl von, in der Brennkraftmaschine unverbauter Glühstiftkerzen ermittelt wird und nach dem Einbau einer, aus der Mehrzahl ausgewählten Glühstiftkerze (21, 22, 23, 24) in die Brennkraftmaschine ein Kalibrierschritt durchgeführt wird, indem je eine Messung eines Widerstandswertes bei zwei verschiedenen, nacheinander an die Glühstiftkerze angelegten Spannungen erfolgt, wobei jedem gemessenen Widerstandswert aus der Temperatur-Widerstands-Referenzkorrelation (B,F) ein Temperaturwert zugeordnet wird, wodurch eine, der in der Brennkraftmaschine verbauten Glühstiftkerze (21, 22, 23, 24) entsprechende spezifische Temperatur-Widerstands-Korrelation (II; III) ermittelt wird, aus welcher die Temperatur der Glühstiftkerze (21, 22, 23, 24) während des Betriebes des Glühstiftkerze (21, 22, 23, 24) in der Brennkraftmaschine bestimmt wird.

2. Verfahren nach Anspruch 1 **dadurch gekennzeichnet, dass** während des Kalibrierschrittes bei Anliegen der ersten Spannung an der Glühstiftkerze (21, 22, 23, 24) ein erster Widerstandswert (R21₇; R22₇) der Glühstiftkerze (21, 22, 23, 24) ermittelt wird, welchem aus einer ersten, bei der ersten Spannung ermittelten Temperatur- Widerstands-Referenzkorrelation (B) eine erste Temperatur (T21₇; T22₇) zugeordnet wird, und bei einer zweiten, an derselben Glühstiftkerze (21, 22, 23, 24) anliegenden Spannung ein zweiter Widerstandswert (R21₄; R22₄) gemessen wird, dem aus einer zweiten, bei der vorgegebenen zweiten Spannung ermittelten Temperatur-Widerstands-Referenzkorrelation (F) ein zweiter Temperaturwert (T21₄; T22₄) zugeordnet wird, wobei aus dem so bestimmten ersten Wertepaar (R21₄;T21₄ und R21₇; T21₇) des ersten gemessenen Widerstandswertes und dem zugeordneten ersten Temperaturwert sowie dem zweiten Wertepaar (R22₄;T22₄ und R22₇; T22₇) des zweiten gemessenen Widerstandswertes und dem zugeordneten zweiten Temperaturwert die, für die verbaute Glühstiftkerze spezifische Temperatur-Widerstands-Korrelation (II, III) gebildet wird.

3. Verfahren nach Anspruch 1, oder 2, **dadurch gekennzeichnet, dass** die Temperatur- Widerstands-Referenzkorrelation (B, F) als Mittelwert über einem Glühstiftkerzenwiderstand aus einer Mehrzahl mit unterschiedlichen Fertigungstoleranzen behafteter Glühstiftkerzen (21, 22, 23, 24) eines Glühstiftkerzentyps nach deren Herstellung bestimmt wird.

4. Verfahren nach Anspruch 3, **dadurch gekennzeichnet, dass** die Temperatur-Widerstands-Referenzkorrelation als Referenzkennlinie (B, F), vorzugsweise Referenzgerade, ausgebildet ist, welche mit einem Toleranzband (B1, B2; F1, F2) versehen wird, welches dieselbe Steigung aufweist, wie die Referenzkennlinie.

5. Verfahren nach Anspruch 3 oder 4, **dadurch gekennzeichnet, dass** die Temperatur-Widerstands-Referenzkorrelation (B, F) einmalig für jeden Glühstiftkerzentyp ermittelt und abgespeichert wird.

6. Verfahren nach mindestens einem der vorhergehenden Ansprüche **dadurch gekennzeichnet, dass** der erste Kalibrierschritt der Glühstiftkerzen in einer Bandende-Fertigung eines Kraftfahrzeuges ausgeführt wird.

7. Verfahren nach mindestens einem der vorhergehenden Ansprüche, **dadurch gekennzeichnet, dass** der Kalibrierschritt zur Bestimmung der glühstiftkerzenspezifischen Temperatur-Widerstands-Korrelation (II, III) in einer Nachlaufphase eines, die Brennkraftmaschine steuernden und/oder regelnden Steuergerätes (4, 7) ausgeführt wird.

8. Verfahren nach Anspruch 7, **dadurch gekennzeichnet, dass** der Kalibrierschritt zur Bestimmung der glühstiftkerzenspezifischen Temperatur-Widerstands-Korrelation (II, III) mehrfach wiederholt wird.

9. Verfahren nach Anspruch 7oder 8, **dadurch gekennzeichnet, dass** eine Häufigkeit der Wiederholung des Kalibrierschrittes zur Bestimmung der glühstiftkerzenspezifischen Temperatur-Widerstands-Korrelation (II, III) in Abhängigkeit von einer Anzahl der stattgefundenen Glühungen und/oder der Glühintensitäten und/oder der Glühdauer der Glühstiftkerze (21, 22, 23, 24) erfolgt.

10. Verfahren nach Anspruch 7 oder 8, **dadurch gekennzeichnet, dass** der Kalibrierschritt zur Bestimmung der glühstiftkerzenspezifischen Temperatur-Widerstands-Korrelation (II, III) nach einem Austausch der Glühstiftkerze (21, 22, 23, 24) erfolgt.

11. Verfahren nach mindestens einem der vorhergehenden Ansprüche, **dadurch gekennzeichnet, dass** die Messung des ersten bzw. zweiten Widerstandes (R21₇, R22₇; R21₄, R22₄) nach Ausbildung eines stationären Temperaturverlaufes innerhalb der Glühstiftkerze (21, 22, 23, 24) nach dem Anlegen der ersten bzw. zweiten Spannung erfolgt.

12. Vorrichtung zur Bestimmung der Temperatur einer Glühstiftkerze bei einem Betrieb in einer Brennkraftmaschine, umfassend eine Verarbeitungseinheit (4a), welche mit einer Speichereinheit (12) verbunden ist, wobei in der Speichereinheit (12) eine Temperatur-Widerstands-Referenzkorrelation (B, F) abgespeichert ist, **dadurch gekennzeichnet, dass** die Verarbeitungseinheit (4a) nach dem Einbau der Glühstiftkerze (21, 22, 23, 24) in die Brennkraftmaschine einen Kalibrierschritt ausführt, bei welchem mittels der, vor dem Einbau der Glühstiftkerze (21, 22, 23, 24) in die Brennkraftmaschine aus einer Mehrzahl von in der Brennkraftmaschine unverbauter Glühstiftkerzen bestimmten Temperatur-Widerstands-Referenzkorrelation (B, F) eine, für die aus der Mehrzahl ausgewählte und verbaute Glühstiftkerze spezifische Temperatur- Widerstands-Korrelation (II, III) ermittelt wird, indem je eine Messung eines Widerstandswertes bei zwei verschiedenen, nacheinander an die Glühstiftkerze angelegten Spannungen erfolgt, wobei jedem gemessenen Widerstandswert aus der Temperatur-Widerstands-Referenzkorrelation (B,F) ein Temperaturwert zugeordnet wird, und aus der, in der Speichereinheit (12) abgespeicherten spezifischen Temperatur-Widerstands-Korrelation (II, III) die Verarbeitungseinheit (4a) während des Betriebes der Glühstiftkerze (21, 22, 23, 24) in der Brennkraftmaschine die Temperatur der Glühstiftkerze (21, 22, 23, 24) bestimmt.

13. Vorrichtung nach Anspruch 12 **dadurch gekennzeichnet, dass** die, eine erste Spannung an die Glühstiftkerze (21, 22, 23, 24) anlegende Verarbeitungseinheit (4a) mit einer Strommesseinrichtung (51, 52, 53, 54) verbunden ist, welche ein erstes Stromsignal an die Verarbeitungseinheit (4a) leitet, welche aus diesem ersten Stromsignal einen ersten Widerstandswert (R21₇, R22₇) bestimmt und diesem ersten Widerstandswert (R21₇, R22₇) aus der abgespeicherten ersten Temperatur-Widerstands-Referenzkorrelation (B) einen ersten Temperaturwert (T21₇, T22₇) zuordnet und anschließend eine zweite Spannung an die Glühstiftkerze (21, 22, 23, 24) anlegt, wobei die Strommesseinrichtung (51, 52, 53, 54) der Verarbeitungseinheit (4a) ein zweites Stromsignal liefert, aus welchem die Verarbeitungseinheit (4a) einen zweiten Widerstandswert (R21₄, R22₄) ermittelt, welchem ein zweiter Temperaturwert (T21₄, T22₄) aus der abgespeicherten, zweiten Temperatur-Widerstands-Referenzkorrelation (F) zugeordnet wird, wobei die Verarbeitungseinheit (4a) aus dem erstem Temperatur-Widerstands-Wertepaar (R21₇, T21₇; R22₇, T22₇) und dem zweiten Temperatur-Widerstands-Wertepaar (R21₄, T21₄; R22₄, T22₄) die glühstiftkerzenspezifische Temperatur-Widerstands-Korrelation (II, III) bestimmt.

## Claims

1. Method for determining the temperature of a pencil glowplug during operation in an internal combustion engine, in which a temperature-resistance reference correlation (B, F) is determined, **characterized in that** the temperature-resistance reference correlation (B, F) is acquired from a multiplicity of pencil glowplugs which are not installed in the internal combustion engine, and after the installation of a pencil glowplug (21, 22, 23, 24), selected from the multiplicity, in the internal combustion engine a calibration step is carried out by respectively carrying out a measurement of a resistance value at two different voltages which are applied successively to the pencil glowplug, wherein each measured resistance value from the temperature-resistance reference correlation (B, F) is assigned a temperature value, as a result of which a specific temperature-resistance correlation (II; III) which corresponds to the pencil glowplug (21, 22, 23, 24) installed in the internal combustion engine is acquired and, from which temperature-resistance correlation (II; III) the temperature of the pencil glowplug (21, 22, 23, 24) during the operation of the pencil glowplug (21, 22, 23, 24) in the internal combustion engine is determined.

2. Method according to Claim 1, **characterized in that** during the calibration step when the first voltage is applied to the pencil glowplug (21, 22, 23, 24), a first resistance value (R21₇; R22₇) of the pencil glowplug (21, 22, 23, 24) is acquired and is assigned a first temperature (T21₇; T22₇) from a first temperature-resistance reference correlation (B) which is acquired at the first voltage, and at a second voltage which is present at the same pencil glowplug (21, 22, 23, 24) a second resistance value (R21₄; R22₄) is measured and is assigned a second temperature value (T21₄; T22₄) from a second temperature-resistance reference correlation (F) which is acquired at the predefined second voltage, wherein the specific temperature-resistance correlation (II, III) for the installed pencil glowplug is formed from the first value pair (R21₄; T21₄ and R21₇; T21₇) which is thus determined for the first measured resistance value and the assigned first temperature value, as well as from the second value pair (R22₄; T22₄ and R22₇; T22₇) for the second measured resistance value and the assigned second temperature value.

3. Method according to Claim 1 or 2, **characterized in that** the temperature-resistance reference correlation (B, F) is determined as a mean value over a pencil glowplug resistance from a multiplicity of pencil glowplugs (21, 22, 23, 24), having different fabrication tolerances, of a type of pencil glowplug after its manufacture.

4. Method according to Claim 3, **characterized in that** the temperature-resistance reference correlation is embodied as a reference characteristic curve (B, F), preferably as a reference straight line, which is provided with a tolerance band (B1, B2; F1, F2) which has the same gradient as the reference characteristic curve.

5. Method according to Claim 3 or 4, **characterized in that** the temperature-resistance reference correlation (B, F) is acquired and stored once for each type of pencil glowplug.

6. Method according to at least one of the preceding claims, **characterized in that** the first calibration step of the pencil glowplugs is executed in a belt-end fabrication step of a motor vehicle.

7. Method according to at least one of the preceding claims, **characterized in that** the calibration step for determining the pencil-glowplug-specific temperature-resistance correlation (II, III) is executed in a run-on phase of a control unit (4, 7) which performs open-loop and/or closed-loop control of the internal combustion engine.

8. Method according to Claim 7, **characterized in that** the calibration step is repeated multiple times in order to determine the pencil-glowplug-specific temperature-resistance correlation (II, III).

9. Method according to Claim 7 or 8, **characterized in that** a frequency of the repetition of the calibration step for determining the pencil-glowplug-specific temperature-resistance correlation (II, III) occurs as a function of a number of the glow operations which have taken place and/or the glow intensities and/or the glow period of the pencil glowplug (21, 22, 23, 24).

10. Method according to Claim 7 or 8, **characterized in that** the calibration step for determining the pencil-glowplug-specific temperature-resistance correlation (II, III) occurs after replacement of the pencil glowplug (21, 22, 23, 24).

11. Method according to at least one of the preceding claims, **characterized in that** the first and second resistors (R21₇, R22₇, R21₄, R22₄) are measured after the formation of a stationary temperature profile within the pencil glowplug (21, 22, 23, 24) after the application of the first and second voltages.

12. Device for determining the temperature of a pencil glowplug during operation in an internal combustion engine, comprising a processing unit (4a) which is connected to a memory unit (12), wherein a temperature-resistance reference correlation (B, F) is stored in the memory unit (12), **characterized in that** after the installation of the pencil glowplug (21, 22, 23, 24) in the internal combustion engine the processing unit (4a) executes a calibration step during which a specific temperature-resistance correlation (II, III) for the pencil glowplug which is selected from the multiplicity and installed is acquired by means of the temperature-resistance reference correlation (B, F) which is determined before the installation of the pencil glowplug (21, 22, 23, 24) in the internal combustion engine, from a multiplicity of pencil glowplugs which have not been installed in the internal combustion engine by respectively carrying out a measurement of a resistance value at two different voltages which are successively applied to the pencil glowplug, wherein each measured resistance value is assigned a temperature value from the temperature-resistance reference correlation (B, F), and during the operation of the pencil glowplug (21, 22, 23, 24) in the internal combustion engine the processing unit (4a) determines the temperature of the pencil glowplug (21, 22, 23, 24) from the specific temperature-resistance correlation (II, III) stored in the memory unit (12).

13. Device according to Claim 12, **characterized in that** the processing unit (4a) which applies a first voltage to the pencil glowplug (21, 22, 23, 24) is connected to a current-measuring device (51, 52, 53, 54) which feeds a first current signal to the processing unit (4a) which determines a first resistance value (R21₇, R22₇) from this first current signal, and assigns this first resistance value (R21₇, R22₇) a first temperature value (T21₇, T22₇) from the stored first temperature-resistance reference correlation (B), and subsequently applies a second voltage to the pencil glowplug (21, 22, 23, 24), wherein the current-measuring device (51, 52, 53, 54) of the processing unit (4a) supplies a second current signal from which the processing unit (4a) acquires a second resistance value (R21₄, R22₄) which is assigned a second temperature value (T21₄, T22₄) from the stored second temperature-resistance reference correlation (F), wherein the processing unit (4a) determines the pencil-glowplug-specific temperature-resistance correlation (II, III) from the first temperature-resistance value pair (R21₇, T21₇; R22₇, T22₇) and the second temperature-resistance value pair (R21₄, T21₄; R22₄, T22₄).

## Revendications

1. Procédé pour la détermination de la température d'une bougie de préchauffage lors d'un fonctionnement dans un moteur à combustion interne, lors duquel une corrélation température-résistance de référence (B, F) est déterminée, **caractérisé en ce que** la corrélation température-résistance de référence (B, F) est déterminée à partir d'une pluralité de bougies de préchauffage non montées dans le moteur à combustion interne et **en ce qu'**une étape d'étalonnage est effectuée après l'installation dans la moteur à combustion interne d'une bougie de préchauffage sélectionnée (21, 22, 23, 24) au sein de ladite pluralité, en faisant en sorte que chaque mesure d'une valeur de résistance soit effectuée pour deux tensions différentes, appliquées l'une à la suite de l'autre à la bougie de préchauffage, dans lequel une valeur de température provenant de la corrélation de référence température-résistance (B, F) est associée à chaque valeur de résistance mesurée, cela permettant de déterminer une corrélation température-résistance spécifique (II ; III) correspondant à la bougie de préchauffage (21, 22, 23, 24) montée dans le moteur à combustion interne, à partir de laquelle la température de la bougie de préchauffage (21, 22, 23, 24) est déterminée pendant le fonctionnement de la bougie de préchauffage (21, 22, 23, 24) dans le moteur à combustion interne.

2. Procédé selon la revendication 1, **caractérisé en ce que**, pendant l'étape d'étalonnage, lors de l'application de la première tension à la bougie de préchauffage (21, 22, 23, 24), une première valeur de résistance (R21₇; R22₇) de la bougie de préchauffage (21, 22, 23, 24) est déterminée, à laquelle est associée une première température (T21₇ ; T22₇) provenant d'une première corrélation température-résistance de référence (B) déterminée pour la première tension, et une deuxième valeur de résistance (R21₄ ; R22₄) est mesurée pour une deuxième tension appliquée à la même bougie de préchauffage (21, 22, 23, 24), à laquelle est associée une deuxième valeur de température (T21₄ ; T22₄) provenant d'une deuxième corrélation température-résistance de référence (F) déterminée pour la deuxième tension prédéterminée, dans lequel la corrélation température-résistance spécifique (II, III) est établie pour la bougie de préchauffage montée à partir de la première paire de valeurs (R21₄ ; T21₄ et R21₇ ; T21₇) ainsi déterminée, constituée de la première valeur de résistance mesurée et de la première valeur de température associée, ainsi que de la deuxième paire de valeurs (R22₄ ; T22₄ et R22₇ ; T22₇), constituée de la deuxième valeur de résistance mesurée et de la deuxième valeur de température associée.

3. Procédé selon la revendication 1 ou 2, **caractérisé en ce que** la corrélation température-résistance de référence (B, F) est déterminée en tant que valeur moyenne sur une résistance de bougie de préchauffage provenant d'une pluralité de bougies de préchauffage (21, 22, 23, 24) présentant différentes tolérances de fabrication pour un certain type de bougie de préchauffage, après leur fabrication.

4. Procédé selon la revendication 3, **caractérisé en ce que** la corrélation température-résistance de référence est établie sous la forme d'une courbe caractéristique de référence (B, F), de préférence d'une droite de référence, qui est dotée d'une bande de tolérance (B1, B2 ; F1, F2), présentant la même pente que la courbe caractéristique de référence.

5. Procédé selon la revendication 3 ou 4, **caractérisé en ce que** la corrélation température-résistance de référence (B, F) est déterminée et enregistrée une fois pour chaque type de bougie de préchauffage.

6. Procédé selon au moins l'une des revendications précédentes, **caractérisé en ce que** la première étape d'étalonnage des bougies de préchauffage est réalisée au cours d'une fabrication de fin de bande d'un véhicule automobile.

7. Procédé selon au moins l'une des revendications précédentes, **caractérisé en ce que** l'étape d'étalonnage destinée à la détermination de la corrélation température-résistance (II, III) spécifique des bougies de préchauffage est réalisée lors d'une phase de post-traitement d'un appareil de commande (4, 7) qui commande et/ou qui régule un moteur à combustion interne.

8. Procédé selon la revendication 7, **caractérisé en ce que** l'étape d'étalonnage est répétée plusieurs fois pour la détermination de la corrélation température-résistance (II, III) spécifique des bougies de préchauffage.

9. Procédé selon la revendication 7 ou 8, **caractérisé en ce qu'**une fréquence de répétition de l'étape d'étalonnage destinée à la détermination de la corrélation température-résistance (II, III) spécifique des bougies de préchauffage s'effectue en fonction d'un nombre des préchauffages s'étant produits et/ou des intensités de préchauffage et/ou de la durée de préchauffage de la bougie de préchauffage (21, 22, 23, 24).

10. Procédé selon la revendication 7 ou 8, **caractérisé en ce que** l'étape d'étalonnage destinée à la détermination de la corrélation température-résistance (II, III) spécifique des bougies de préchauffage s'effectue après un échange de la bougie de préchauffage (21, 22, 23, 24).

11. Procédé selon au moins l'une des revendications précédentes, **caractérisé en ce que** la mesure de la première ou de la deuxième résistance (R21₇, R22₇ ; R21₄, R22₄) s'effectue après l'établissement d'une évolution stationnaire de la température à l'intérieur de la bougie de préchauffage (21, 22, 23, 24), après application de la première ou de la deuxième tension.

12. Dispositif pour la détermination de la température d'une bougie de préchauffage lors d'un fonctionnement dans un moteur à combustion interne, comprenant une unité de traitement (4a) qui est reliée à une unité à mémoire (12), dans lequel une corrélation température-résistance de référence (B, F) est enregistrée dans l'unité à mémoire (12), **caractérisé en ce que** l'unité de traitement (4a) exécute une étape d'étalonnage après l'installation de la bougie de préchauffage (21, 22, 23, 24) dans la moteur à combustion interne, étape lors de laquelle une corrélation température-résistance (II, III) spécifique est déterminée, pour la bougie de préchauffage sélectionnée à partir de ladite pluralité et montée, au moyen de la corrélation température-résistance de référence (B, F) déterminée à partir d'une pluralité de bougies de préchauffage non montées dans le moteur à combustion interne, avant le montage de la bougie de préchauffage (21, 22, 23, 24) dans la moteur à combustion interne, en faisant en sorte que chaque mesure d'une valeur de résistance s'effectue pour deux tensions différentes appliquées l'une à la suite de l'autre à la bougie de préchauffage, dans lequel une valeur de température est associée à chaque valeur de résistance mesurée à partir de la corrélation température-résistance de référence (B,F), et l'unité de traitement (4a) détermine la température de la bougie de préchauffage (21, 22, 23, 24) pendant le fonctionnement de la bougie de préchauffage (21, 22, 23, 24) dans le moteur à combustion interne à partir de la corrélation température-résistance (II, III) spécifique stockée dans l'unité à mémoire (12).

13. Dispositif selon la revendication 12, **caractérisé en ce que** l'unité de traitement (4a) appliquant une première tension à la bougie de préchauffage (21, 22, 23, 24) est reliée à un dispositif de mesure de courant (51, 52, 53, 54) acheminant un premier signal de courant à l'unité de traitement (4a), qui détermine à partir dudit premier signal de courant une première valeur de résistance (R21₇, R22₇) et associe à ladite première valeur de résistance (R21₇, R22₇) une première valeur de température (T21₇, T22₇) provenant de la première corrélation température-résistance de référence stockée (B) puis applique une deuxièmes tension à la bougie de préchauffage (21, 22, 23, 24), dans lequel le dispositif de mesure de courant (51, 52, 53, 54) de l'unité de traitement (4a) délivre un deuxième signal de courant, à partir duquel l'unité de traitement (4a) détermine une deuxième valeur de résistance (R21₄, R22₄), à laquelle est associée une deuxième valeur de température (T21₄, T22₄) provenant de la deuxième corrélation température-résistance de référence stockée (F), dans lequel l'unité de traitement (4a) détermine la corrélation température-résistance spécifique des bougies de préchauffage (II, III) à partir de la première paire de valeurs de température-résistance (R21₇, T21₇ ; R22₇, T22₇) et de la deuxième paire de valeurs de température-résistance (R21₄, T21₄; R22₄, T22₄).
